Europäisches Patentamt

European Patent Office

Office européen des brevets

(19)

(11) Publication number: 0 100 469

A2

# (12) EUROPEAN PATENT APPLICATION

(21) Application number: 83106823.4

(22) Date of filing: 12.07.83

(51) Int. Cl.³: A 23 G 9/22

(30) Priority: 29.07.82 IT 1518482 U

(43) Date of publication of application:
15.02.84 Bulletin 84/7

(84) Designated Contracting States:
AT BE CH DE FR GB LI LU NL SE

(71) Applicant: Carpigiani Bruto Macchine Automatiche S.p.A.
45, Via Emilia
I-40011 Anzola Emilia, Bologna(IT)

(72) Inventor: Manfroni, Ezio
56, Via Altopiano
I-40037 Sassa Marconi(IT)

(74) Representative: Porsia, Attilio et al,
c/o Succ. Ing. Fischetti & Weber Via Caffaro 3
I-16124 Genova(IT)

(54) Scraping and stirring device for ice cream making machines.

(57) An ice cream making machine comprising a freezing cylinder (11); a shaft (1) co-axial with said freezing cylinder (11); means to rotate said shaft; two pairs of arms (2, 3) keyed to the end portions of said shaft (1), scraping blades (4) extending over the entire length of said cylinder 11 and supported by said arms (2, 3) in scraping relation with the walls of said freezing cylinder (11), and sliding blocks (8) at the two ends of said blades (4). Said blades (4) are provided at the ends thereof with a side projection (5) formed with a through hole (6), said projection (5) being received in a recess (9) formed in a side face of each of said sliding blocks (8) said sliding blocks (8) being formed with a blind hole (10) intersecting said recess (9), said arms (2, 3) being provided at an end with a stem (7), designed to be introduced into the blind hole (10) of said sliding blocks (8) and through the hole (6) in said projection (5) of the blades (4), so as to inter-engage said blades (4) and sliding blocks (8) with said arms (2, 3).

Fig 1

EP 0 100 469 A2

0100469

Scraping and stirring device for ice cream making machines

This invention relates to a scraping and stirring device for ice cream making machines. More particularly, this invention relates to a device for securing the scarping blades to the spokes or arms of the stirrer in a simple and reliable manner.

According to one feature of the invention, in an ice cream machine of the type comprising a freezing cylinder, a shaft coaxial with said freezing cylinder, means to rotate said shaft, at least two pairs of radial arms keyed to the end portions of said shaft, scraping blades extending over the entire lenght of said cylinder and supported by said arms in scraping relation with the walls of said freezing cylinder, and sliding blocks at the two ends of said blades; the improvement is provided according to which the said blades are provided at the ends thereof with a side projection formed with a through hole, said projections being received in a recess formed in a side face of each of the said sliding blocks, said sliding blocks being formed with a blind hole intersecting said recess, said arms being provided at an end with a stem designated to be introduced into the blind hole of said sliding blocks and through the hole in said projection of the blades, so as to inter-engage said blades and sliding blocks with said arms.

According to a further feature of the invention, means are provided to be inserted between said arms and said sliding blocks to compensate for the wear of said blades.

Further objects and advantages of this invention will be more apparent from the following description of a preferred embodiment thereof, made with reference to the accompanying drawing, wherein:

Figure 1 is a fragmentary elevational and partly sectional view of the end of a spoke of a stirrer having secured thereto the scarper blade and guide sliding block, and

Figure 2 is a diagrammatical front view of the stirrer according to the invention.

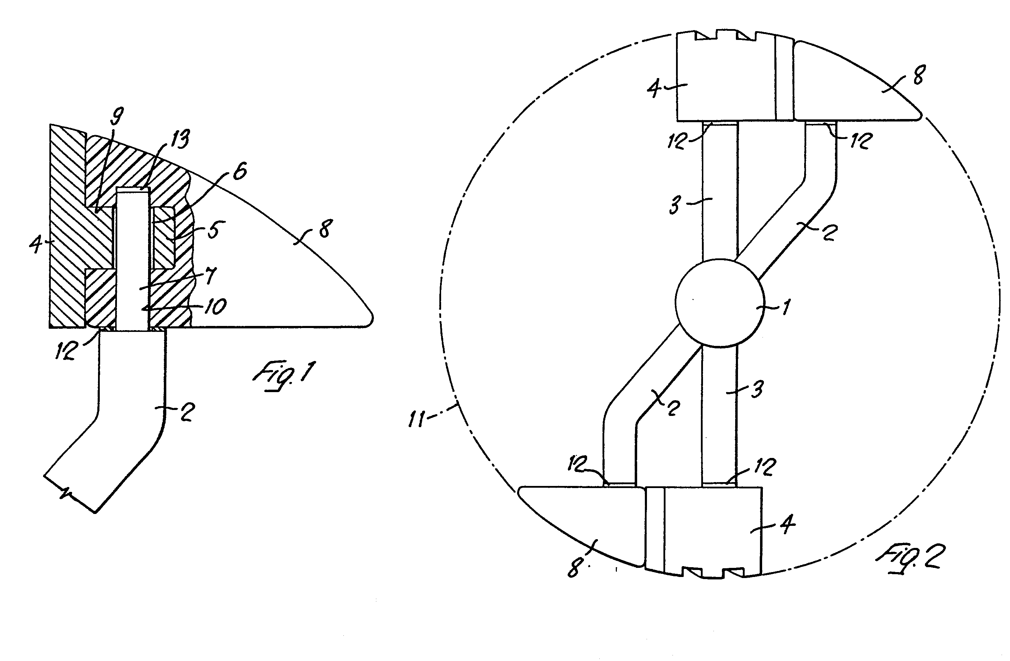

With reference to the drawing, the numeral 1 indicates the shaft of the stirrer. Keyed to both ends of the shaft 1 are the spokes or radial arms 2, 3 supporting the scraping blades 4. Each blade 4 is provided, at the end thereof, with a side projection 5 formed with a through hole 6 engaged on a stem 7 which is formed as a continuation of the end of each arm 2,3. The numeral 8 indicates the sliding blocks of self-lubricating material, formed with a side recess 9 for receiving said projection 5 and with a blind hole 10 which, when said projection 5 is in the inserted condition, is co-axial with the hole 6 of said projection. It is apparent that after the insertion of the projection 5 into the recess 9, the insertion of the stem 7 of the arm 2 through the hole 10 of the sliding block and the hole 6 of the projection of the blade 4 will permanently inter-engage these members together.

By virtue of the sliding blocks 8, the introduction of the stirrer into the cylinder 11 of the machine will be also facilitated.

The device described above also permits to easily compensate for the wear of the blade 4 and sliding blocks 8 by the addition of shims 12, 13.

The advantages of the device described above are apparent and can be summarized as follows:

a) Concealed and hygienically perfect coupling between the blade 4 and arms 2, 3 forming the frame of the stirrer.

b) Concealed locking of the sliding block to the blade/stirrer

- 4 -          0100469

assembly.

c) Easy compensation for the wear of blades and sliding blocks by shimming at 12 and 13.

d) Easy replacement of the blades 4 and sliding blocks 8, while saving the frame comprising the arms.

e) Since the end portions of the arms 2, 3 are parallel, the wear of the blades will be uniform and the shimming to compensate for said wear may be the same at both ends of a blade.

f) By virtue of the large self-lubricating sliding blocks, the stirrer is efficiently centered in the cylinder, even when only two blades are used.

CLAIMS

1. An ice cream making machine of the type comprising a freezing cylinder (11); a shaft (1) co-axial with said freezing cylinder (11); means to rotate said shaft; at least two pairs of arms (2, 3) keyed to the end portions of said shaft (1), scraping blades (4) extending over the entire length of said cylinder 11 and supported by said arms (2, 3) in scraping relation with the walls of said freezing cylinder (11), and sliding blocks (8) at the two ends of said blades (4), characterized in that said blades (4) are provided at the ends thereof with a side projection (5) formed with a through hole (6), said projection (5) being received in a recess (9) formed in a side face of each of said sliding blocks (8), said sliding blocks (8) being formed with a blind hole (10) intersecting said recess (9), said arms (2, 3) being provided at an end with a stem (7) designed to be introduced into the blind hole (10) of said sliding blocks (8) and through the hole (6) in said projection (5) of the blades (4), so as to inter-engage said blades (4) and sliding blocks (8) with said arms (2, 3).

2. A machine according to claim 1, characterized in that means (12, 13) are provided to be inserted between said arms (2, 3) and said sliding blocks (8) to compensate for the wear of said blades (4).

Fig. 1

Fig. 2

1/1